# EUROPEAN PATENT SPECIFICATION

(11) **EP 1 244 513 B1**
(45) Date of publication and mention of the grant of the patent: **29.11.2006**
(21) Application number: 99968828.6
(22) Date of filing: 21.12.1999
(51) Int. Cl.: B01J 10/02, B01J 19/32, B01D 3/00, B01D 3/28, B01D 3/32, B01D 47/14

(54) **DISTRIBUTION OF GAS AND LIQUID IN A CONTACT DEVICE**
VERTEILUNG VON GAS UND FLÜSSIGKEIT IN EINER KONTAKTVORRICHTUNG
DISTRIBUTION DE GAZ ET DE LIQUIDE DANS UN DISPOSITIF DE CONTACT

(43) Date of publication of application: 02.10.2002
(73) Proprietor: ALSTOM, 92309 Levallois-Perret Cedex (FR)
(72) Inventor: KALTIN, Lars, S-352 40 Växjö (SE); BJARN , Odd, E., N-0984 Oslo (NO)
(74) Representative: Berglund, Stefan
(86) International application number: PCT/SE1999/002435
(87) International publication number: WO 2001/045834

(56) References cited:
- DE-A- 1 444 458
- GB-A- 1 221 064
- SE-C2- 522 460
- US-A- 5 536 454
- DATABASE WPI Week 198234, Derwent Publications Ltd., London, GB; AN 1982-70952E, XP002953002 & JP 57 113 805 A (TAKEDA K) 15 July 1982 & PATENT ABSTRACTS OF JAPAN & JP 57 113 805 A (KIMIKO TAKEDA ET AL.)

## Description

The present invention relates to a contact device according to the preamble of claim 1.

From US 5139544, a contact device of the kind described above is previously known, which comprises a structured packing with a plurality of differently oriented packing layers. Liquid is introduced into the contact device directly from a liquid distributor, which is arranged at the top of the structured packing, into an upwardly directed flow passage of an upper packing layer, for achieving contact between gas and liquid within the upper packing layer and reducing the risk of formation of drops.

The US document discloses a traditionally designed contact device, in which the gas flow is introduced from the side of the contact device, that is, perpendicular to the direction of flow in the contact device. To achieve a uniform gas distribution, the packing of contact devices, of prior art, is usually located far downstream of the inlet, such that a change in direction of the gas flow may occur and the flow become stabilised into a uniform distribution before the gas penetrates into the packing. However, the necessary distance from the inlet of the contact device to the packing is too large to be feasible in practice and normally, therefore, the packing is located closer to the inlet of the contact device than what is desirable.

It has now proved that such a design results in poor gas distribution in the packing and that eddies are formed behind the inlet edge, resulting in an uneven gas distribution. If the liquid distribution in the packing in a contact device is uniform, but the distribution of the gas is non-uniform, or vice versa, there is a considerable risk that the distribution within the packing becomes poor, which may result in the formation of different paths of gas or liquid through the contact device. This leads to lower transfer of mass than expected.

GB 1 221 064 discloses an apparatus for gas absorption. The apparatus comprises a plurality of plane layers in form of nets or plates, which slope downwardly in a zigzag configuration. A liquid is supplied at an upper part of the contact device such that it forms a downwardly flowing liquid film on the upper surface of the layers. A gas flows upwardly in a substantially vertical direction through the apparatus via the holes in the inclined nets or plates and the liquid film such that a chemical reaction between the liquid and the gas is achieved.

JP 57-113805 shows a contact device comprising corrugated plates. The corrugated plates are substantially vertically arranged at a distance from each other. A liquid is supplied at an upper part of the contact device such that it forms a downwardly flowing liquid film on the surfaces of the vertically arranged corrugated plates. A gas flows upwardly in a substantially vertical direction in the spaces between the plates.

The object of the present invention is to improve the distribution of gas and liquid within the packing.

This object is achieved according to the invention with a device of the kind described in the introductory part of this description, which is characterised by the features indicated in the characterising part of claim 1.

The structured packing is utilised as a gas distribution member, in that the pressure drop and the structure of the packing are connected with a definite position of the packing in the contact device, that is, the packing is placed on a level with the upper edge of the gas inlet into the contact device.

By using a structured packing in the contact device, that is, a packing where the flow channels through the packing have a definite direction, and placing the packing such that the lower edge of the packing lies on a level with the upper edge of the gas inlet of the contact device, the distribution of the gas in the packing will be considerably improved, while at the same time the height of the contact device is reduced. The location together with the pressure drop of the packing contributes to prevent the formation of eddies behind the inlet edge, and, in addition, by directing the first layer in the packing such that the flow of the gas flow perpendicular to the main direction of the flow in the contact device is prevented, a very uniform gas distribution is achieved in the packing.

To avoid disturbance of the distribution of the gas, a necessary supporting lattice is suitably placed at the packing, between the first and second packing layers. The first packing layer is preferably suspended below the supporting lattice and may therefore be easily replaced from below if a replacement is considered necessary.

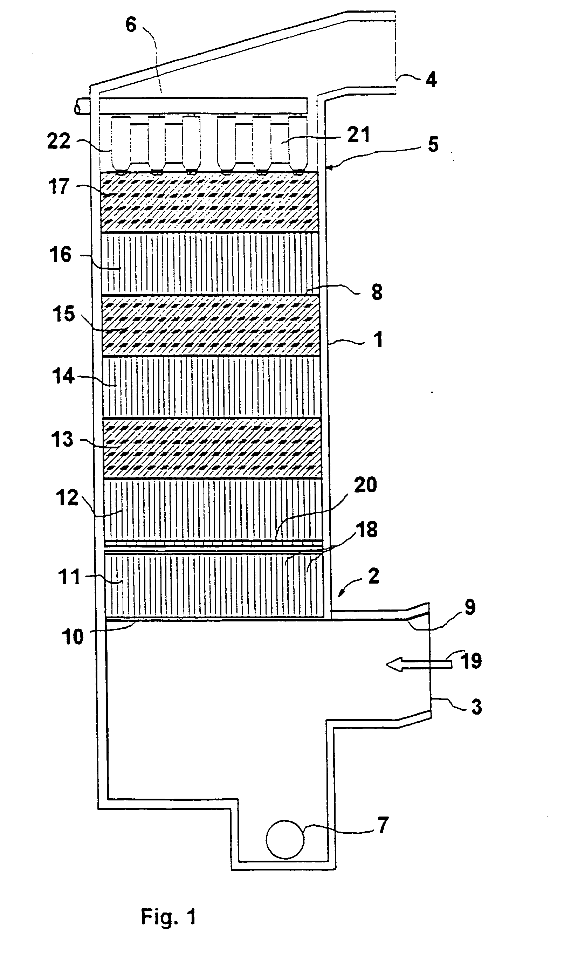

The invention will now be described in detail with reference to the accompanying drawing, wherein
Figure 1 shows a schematic cross-section view of a contact device according to the present invention.

Figure 1 of the drawing shows an essentially vertically arranged contact device 1, comprising an inlet 3, arranged at the lower part 2 of the contact device, essentially perpendicular to the contact device 1, for a gas flow directed upwards through the contact device 1, and an outlet 4 at the upper part 5 thereof, for discharging the treated gas flow, as well as an inlet 6 at the upper part 5 of the contact device, for a liquid flow directed downwards through the contact device 1, and an outlet 7 at the lower part 2 thereof, for discharging the treated liquid flow. The expression contact device comprises, for example, a tower, a column or a scrubber for absorption, adsorption, desorption or distillation, etc.

The contact device 1 comprises at least one structured packing 8, which is placed between the inlet 3 and the outlet 4. An upper edge 9 of the inlet 3 for the gas flow opens out substantially on a level with the lower limiting surface 10 of the structured packing 8. In a known manner, the structured packing 8 may be formed from two corrugated plates, arranged against each other, which between them form a number of flow channels 18. The packing 8 suitably comprises a plurality of packing layers 11-17, of which at least the lowermost packing layer 11 is arranged in such a way that its flow channels 18 through the packing layer 11 extend upwards in a plane arranged essentially perpendicular to the direction of flow 19 of the incoming gas flow. The plates in two adjacent upper packing layers 12-17 are suitably arranged perpendicular to each other, such that the gas flow is conducted upwards through the contact device 1 in a plane located alternately parallel and perpendicular, respectively, to the direction of flow 19. The lowermost packing layer 11 is supported essentially freely below a supporting lattice 20, which is located in the structured packing 8. The two lowermost packing layers 11-12 are arranged in a similar manner, that is, with the respective flow channels 18 located in a common plane.

Above the uppermost packing layer 17, at least one liquid distributor 21 is arranged, which is provided with liquid from the inlet 6. The drawing shows two liquid distributors 21, each having three distribution channels 22, but the number of liquid distributors 21 and their design may, of course, be varied.

## Claims

1. A contact device (1) comprising a structured packing (8) with a plurality of differently oriented packing layers (11-17) formed from two corrugated plates arranged against each other such that between them a number of flow channels are formed, wherein the structured packing (8) is placed between an inlet (3), defining a direction of the flow (19) of the incoming gas flow, and located at the lower part (2) of the contact device (1), for an upwardly directed gas flow, and an outlet (4) at the upper part (5) of the contact device (1), for discharging the treated gas flow, as well as an inlet (6) at the upper part (5) of the contact device (1), for the downwardly directed liquid flow, and an outlet (7) in the lower part (2) of the contact device (1), for discharging the treated liquid flow, **characterised in**
**that** the respective flow channels through the packing layers have a definite direction,
**that** at least the lowermost packing layer (11) is arranged such that the flow channels (18) through the packing layer (11) extend upwardly in the contact device (1) in a plane perpendicular to the direction of the flow (19) of the incoming gas flow,
**that** the plates in two adjacent of the upper packing layers (12 and 13, 14 and 15, 16 and 17) are arranged perpendicular to each other within the contact device (1), in such a way that the flow (19) of the incoming gas is conducted upwards through the contact device (1) in a plane alternately located parallel and perpendicular, respectively, to the direction of the flow (19) of the incoming gas flow within the contact device (1) such as to cause pressure drop through the structured packing (8), and
**that** an upper edge (9) of the inlet (3) for the flow (19) of incoming gas flow being opened out on a level with the lower limiting surface (10) of the structured packing (8), which together with said pressure drop cause that a uniform gas distribution is achieved in the structured packing (8).

2. A contact device according to claim 1, **characterised in that** at least the next to lowermost packing layer (12) is arranged in such a manner that the flow channels through the packing layer (12) extend upwardly in the contact device (1) in a plane perpendicular to the direction of flow (19) of the incoming gas flow.

3. A contact device according to claim 2, **characterised in that** at least the lowermost packing layer (11) is supported essentially freely below a supporting lattice (20), located in the structured packing (8).

4. A contact device according to claim 3, **characterised in that** at least the two lowermost packing layers (11 and 12) are arranged such that the flow channels through each of the two lowermost packing layers (11 and 12) extend vertically upwards in the same plane within the contact device (1).

## Patentansprüche

1. Kontaktvorrichtung (1), die eine strukturierte Packung (8) mit mehreren unterschiedlich orientierten Packungsschichten (11 - 17) umfaßt, die aus zwei gegeneinander angeordneten Wellplatten gebildet sind, so daß zwischen ihnen eine Anzahl von Strömungskanälen entstehen, wobei die strukturierte Packung (8) zwischen einem Einlaß (3), der sich am unteren Teil (2) der Kontaktvorrichtung (1) befindet und eine Richtung der Strömung (19) der eintretenden Gasströmung für eine nach oben gerichtete Gasströmung definiert, einem am oberen Teil (5) der Kontaktvorrichtung (1) befindlichen Auslaß (4) zum Austragen der behandelten Gasströmung, einem am oberen Teil (5) der Kontaktvorrichtung (1) befindlichen Einlaß (6) für die nach unten gerichtete Flüssigkeitsströmung und einem im unteren Teil (2) der Kontaktvorrichtung (1) befindlichen Auslaß (7) zum Austragen der behandelten Flüssigkeitsströmung plaziert ist, **dadurch gekennzeichnet, daß** die jeweiligen Strömungskanäle durch die Packungsschichten eine bestimmte Richtung haben, daß mindestens die unterste Packungsschicht (11) so vorgesehen ist, daß die Strömungskanäle (18) durch die Packungsschicht (11) in der Kontaktvorrichtung (1) nach oben in einer Ebene senkrecht zur Richtung der Strömung (19) der eintretenden Gasströmung verlaufen, daß die Platten in zwei angrenzenden der oberen Packungsschichten (12 und 13, 14 und 15, 16 und 17) innerhalb der Kontaktvorrichtung (1) senkrecht zueinander in einer solchen Weise vorgesehen sind, daß die Strömung (19) des eintretenden Gases nach oben durch die Kontaktvorrichtung (1) in einer Ebene geleitet wird, die abwechselnd parallel bzw. senkrecht zur Richtung der Strömung (19) der eintretenden Gasströmung innerhalb der Kontaktvorrichtung (1) verläuft, so daß ein Druckabfall durch die strukturierte Packung (8) bewirkt wird, und daß eine obere Kante (9) des Einlasses (3) für die Strömung (19) der eintretenden Gasströmung sich nach außen auf einem Niveau mit der unteren begrenzenden Oberfläche (10) der strukturierten Packung (8) öffnet, wodurch zusammen mit dem Druckabfall bewirkt wird, daß in der strukturierten Packung (8) eine gleichmäßige Gasverteilung erzielt wird.

2. Kontaktvorrichtung nach Anspruch 1, **dadurch gekennzeichnet, daß** mindestens die der untersten Packungsschicht (12) nächstgelegene Packungsschicht in einer solchen Weise vorgesehen ist, daß die Strömungskanäle durch die Packungsschicht (12) in der Kontaktvorrichtung (1) nach oben in einer Ebene senkrecht zur Richtung der Strömung (19) der eintretenden Gasströmung verlaufen.

3. Kontaktvorrichtung nach Anspruch 2, **dadurch gekennzeichnet, daß** mindestens die unterste Packungsschicht (11) im wesentlichen frei unterhalb eines in der strukturierten Packung (8) befindlichen Stützgitters (20) abgestützt ist.

4. Kontaktvorrichtung nach Anspruch 3, **dadurch gekennzeichnet, daß** mindestens die zwei untersten Packungsschichten (11 und 12) so vorgesehen sind, daß die Strömungskanäle durch jede der zwei untersten Packungsschichten (11 und 12) vertikal nach oben in der gleichen Ebene innerhalb der Kontaktvorrichtung (1) verlaufen.

## Revendications

1. Dispositif de contact (1) comprenant une garniture structurée (8) avec une pluralité de couches de garniture orientées différemment (11-17) formées à partir de deux plaques ondulées disposées l'une contre l'autre de telle sorte qu'un certain nombre de canaux d'écoulement soient formés entre elles, dans lequel la garniture structurée (8) est placée entre une entrée (3), définissant une direction de l'écoulement (19) du courant de gaz entrant et située à la partie inférieure (2) du dispositif de contact (1), pour un courant de gaz dirigé vers le haut, et une sortie (4) à la partie supérieure (5) du dispositif de contact (1) pour décharger le courant de gaz traité, ainsi qu'une entrée (6) à la partie supérieure (5) du dispositif de contact (1) pour le courant de liquide orienté vers le bas, et une sortie (7) dans la partie inférieure (2) du dispositif de contact (1) pour décharger le courant de liquide traité, **caractérisé en ce que**:
les canaux d'écoulement respectifs entre les couches de garniture présentent une direction définie;
au moins la couche de garniture inférieure (11) est agencée de telle sorte que les canaux d'écoulement (18) à travers la couche de garniture (11) s'étendent vers le haut dans le dispositif de contact (1) dans un plan perpendiculaire à la direction de l'écoulement (19) du courant de gaz entrant;
les plaques dans deux couches de garniture supérieures voisines (12 et 13, 14 et 15, 16 et 17) sont disposées perpendiculairement les unes aux autres à l'intérieur du dispositif de contact (1) de telle sorte que l'écoulement (19) du courant de gaz entrant soit conduit vers le haut à travers le dispositif de contact (1) dans un plan situé alternativement parallèlement et perpendiculairement, respectivement, à la direction de l'écoulement (19) du courant de gaz entrant à l'intérieur du dispositif de contact (1) de manière à provoquer une chute de pression à travers la garniture structurée (8); et
un bord supérieur (9) de l'entrée (3) pour l'écoulement (19) du courant de gaz entrant est ouvert vers l'extérieur à niveau avec la surface de limitation inférieure (10) de la garniture structurée (8), ce qui, en conjonction avec ladite chute de pression, entraîne une distribution de gaz uniforme dans la garniture structurée (8).

2. Dispositif de contact selon la revendication 1, **caractérisé en ce qu'**au moins la couche suivant la couche de garniture inférieure (12) est agencée de telle sorte que les canaux d'écoulement à travers la couche de garniture (12) s'étende vers le haut dans le dispositif de contact (1) dans un plan perpendiculaire à la direction d'écoulement (19) du courant de gaz entrant.

3. Dispositif de contact selon la revendication 2, **caractérisé en ce qu'**au moins la couche de garniture inférieure (11) est supportée essentiellement librement en dessous d'un treillis de support (20) disposé dans ladite garniture structurée (8).

4. Dispositif de contact selon la revendication 3, **caractérisé en ce qu'**au moins les deux couches de garniture inférieures (11 et 12) sont disposées de telle sorte que les canaux d'écoulement à travers chacune des deux couches de garniture inférieures (11 et 12) s'étendent verticalement vers le haut dans le même plan à l'intérieur du dispositif de contact (1).
